# EUROPÄISCHE PATENTSCHRIFT

(11) **EP 3 103 932 B1**
(45) Veröffentlichungstag und Bekanntmachung des Hinweises auf die Patenterteilung: **06.06.2018**
(21) Anmeldenummer: 16173363.9
(22) Anmeldetag: 07.06.2016
(51) Int. Cl.: E03F 7/04, F16K 15/03, F16K 15/18

(54) **RÜCKSTAUVERSCHLUSS**
ANTIFLOODING VALVE
FERMETURE DE RETENUE

(30) Priorität: 11.06.2015 DE 102015109241
(43) Veröffentlichungstag der Anmeldung: 14.12.2016
(73) Patentinhaber: ACO Severin Ahlmann GmbH & Co. KG, 24782 Büdelsdorf (DE)
(72) Erfinder:
(74) Vertreter: Bohnenberger, Johannes

(56) Entgegenhaltungen:
- EP-A1- 1 548 194
- EP-A1- 1 679 407
- DE-A1- 3 331 082
- GB-A- 2 009 877

## Beschreibung

Die Erfindung betrifft einen Rückstauverschluss mit einer Ventilklappe, die mittels eines Notverschlusshebels in einem geschlossenen Zustand arretierbar ist.

Derartige Rückstauverschlüsse, wie sie z.B. aus der EP 1 679 407 A1 bekannt sind, werden üblicherweise in Abwasserrohrleitungen von Hausanschlüssen eingebaut, wenn die Gefahr besteht, dass bei einer Überflutung des angeschlossenen Kanals bzw. Ableitungssystems das Abwasser ins Haus zurückfließen kann. Üblicherweise sind mehrere Klappen (in Reihe geschaltet) vorgesehen, die sich bei einem Rückstau selbsttätig schließen. Der Notverschlusshebel wird dann betätigt, wenn sichergestellt ist, dass ein Rückstau auftritt. Außerdem wird der Notverschlusshebel dann betätigt, die Klappe also fest geschlossen, wenn das System überprüft werden soll. Eine solche Überprüfung geschieht dadurch, dass ein definierter Überdruck vor der Klappe (also im Haus-System) erzeugt wird. Dieser Überdruck wird üblicherweise durch einen sogenannten Prüftrichter erzeugt, wie er aus der DE 203 04 640 U1 bekannt ist. Dieser Prüftrichter wird in eine entsprechende Öffnung des Rückstauverschlussgehäuses eingeschraubt und bis zu einer definierten Höhe mit Wasser gefüllt.

Problematisch an dem bisher bekannten Rückstauverschluss sind die Baugröße und die Stabilität insbesondere des Notverschlusshebels, da ein sicheres Schließen der Klappe eine möglichst hohe Kraft zur Betätigung voraussetzt.

Aus der DE 33 31 082 A ist ein Reinigungsrohr mit Rückstauverschluss bekannt.

Die EP 1 548 194 A1 beschreibt eine Rohrreinigungsvorrichtung für eine flüssigkeitsführende Rohrleitung, in die eine Rückstausicherung einsetzbar ist.

Die GB 2 009 877 A beschreibt einen Hebel zur Betätigung einer Verriegelung eines Reinigungsrohrs.

Ausgehend von der DE 33 31 082 A ist es Aufgabe der Erfindung, einen Rückstauverschluss der eingangsgenannten Art dahingehend aufzuzeigen, dass bei verringerter Baugröße eine optimale Funktion dauerhaft gesichert ist.

Diese Aufgabe wird durch einen Rückstauverschluss nach Anspruch 1 gelöst.

Insbesondere wird diese Aufgabe durch einen Rückstauverschluss, umfassend eine Ventilklappe, die mittels eines Notverschlusshebels in geschlossenem Zustand arretierbar ist, und einen Prüfanschluss, an welchem eine Druckprüfvorrichtung, z.B. ein Prüftrichter anschließbar ist, dadurch gelöst, dass der Notverschlusshebel einen U-förmigen Bedienungshebel mit Schenkeln umfasst, dessen Schenkelenden mit einer Betätigungswelle eines Ventilklappenbetätigungsorgans verbunden sind, wobei der Prüfanschluss zwischen den Schenkeln angeordnet ist.

Durch diese Bauart ist eine kompakte Baugröße gewährleistet, wobei gleichzeitig der Notverschlusshebel lang und stabil ausgebildet sein kann, um die Klappe mit einer großen Kraft dauerhaft schließen zu können.

Der Rückstauverschluss ist vorzugsweise derart ausgebildet, dass der Notverschlusshebel bei angeschlossener Prüfvorrichtung zum Arretieren der Ventilklappe betätigbar ist. Es muss also nicht darauf geachtet werden, dass man zuerst die Ventilklappe schließt und dann die Prüfvorrichtung anbringt.

Vorzugsweise ist ein, die Schenkel verbindendes Betätigungsende des Notverschlusshebels auf seiner Oberseite, an der dem Prüfanschluss zugewandten Kante abgeschrägt oder abgerundet ausgebildet. Dadurch wird erreicht, dass bei hinreichender Stabilität des Hebels ein vergrößerter Betätigungswinkel erzielt werden kann.

Die Schenkel des Notverschlusshebels sind vorzugsweise im Schnitt im Wesentlichen ¼-kreisförmig ausgebildet. Dies führt zu einer sehr hohen Stabilität bei geringem Materialaufwand.

Die Betätigungswelle umfasst vorzugsweise zwei Achsstummel, welche von außen durch die Schenkelenden in Ausnehmungen des Ventilklappenbetätigungsorgans einsteckbar sind. Dadurch ergibt sich eine leichte Montierbarkeit auch bei ggf. notwendigen Reparaturen.

Die Achsstummel weisen an Verbindungsstellen mit dem Ventilklappenbetätigungsorgan und den Schenkelenden eine Verzahnung oder Verkantung, z.B. ein 4-Kantprofil zur drehfesten Verbindung auf. Dadurch wird in einfacher Weise eine drehfeste Verbindung zwischen Hebel und Ventilklappenbetätigungsorgan erreicht.

Die Achsstummel sind vorzugsweise über Schnapphaken oder dergleichen lösbaren Verbindungen mit den Schenkelenden verbindbar. Sie müssen also zur Montage lediglich eingesteckt werden und schnappen dann in ihrer korrekten Position ein, aus der sie auch wieder herauslösbar sind.

Nachfolgend wird eine bevorzugte Ausführungsform der Erfindung anhand von Abbildungen näher erläutert. Hierbei zeigen
- Fig. 1: eine perspektivische Darstellung eines Rückstauverschlusses mit geöffnetem Prüfanschluss,
- Fig. 2: eine perspektivische Darstellung eines teilgeschnittenen Notverschlusshebels,
- Fig. 3: eine ebenfalls perspektivische Darstellung eines teilgeschnittenen Notverschlusshebels, wobei die Schnittebene jedoch senkrecht zu der nach Fig. 2 verläuft,
- Fig. 4A, 4B: einen Schnitt durch die Anordnung nach Fig. 1 mit angesetztem Prüftrichter und mit geschlossener bzw. geöffneter Ventilklappe,
- Fig. 5: eine Explosionsdarstellung des Notverschlusshebels nach Fig. 1 mit Ventilklappenbetätigungsorgan und
- Fig. 6: eine perspektivische Darstellung einer Betätigungswelle aus Fig. 5.

In der nachfolgenden Beschreibung werden für gleiche und gleichwirkende Teile dieselben Bezugsziffern verwendet.

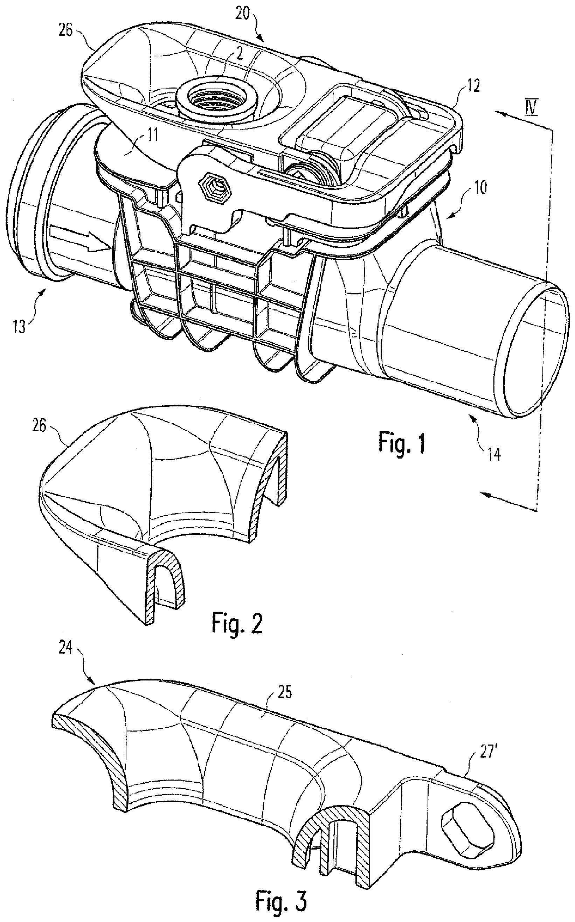

Der in Fig. 1 gezeigte Rückstauverschluss umfasst ein Gehäuse 10 mit einem Einlaufstutzen 13 und einem Auslaufstutzen 14, welcher in der üblichen Weise als Spitzende ausgebildet ist.

Das Gehäuse umfasst einen Gehäusedeckel 11, der über einen oder mehrere Verschlusshebel 12 mit dem Gehäuse 10 verbunden ist.

Auf der Oberseite des Gehäuses 10 ist weiterhin ein Notverschlusshebel 20 vorgesehen, dessen hinteres Betätigungsende mit der Bezugsziffer 26 bezeichnet ist.

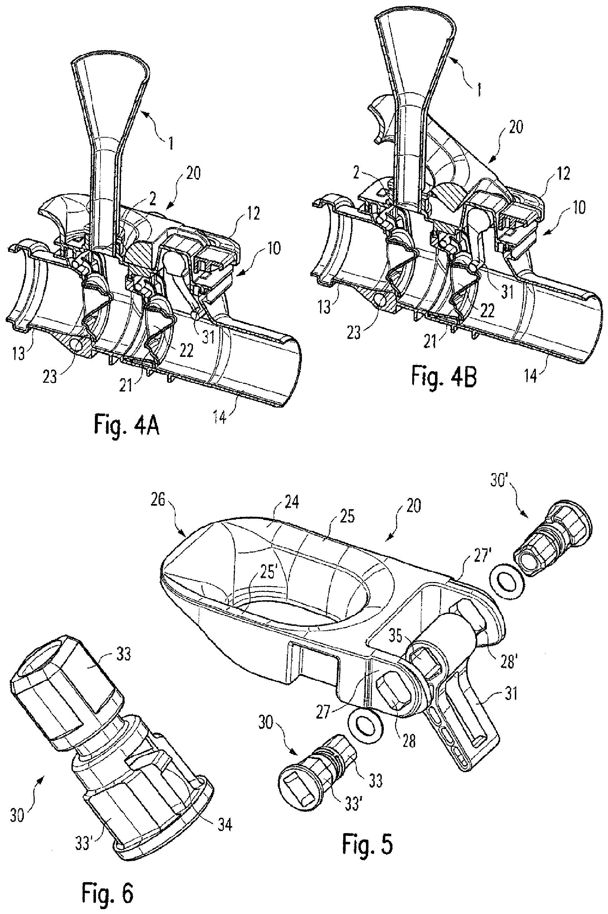

Auf der Oberseite des Gehäuses 10 ist ein Prüfanschluss 2 angebracht, der ein Innengewinde trägt, in welches ein Unterende eines Trichters 1 einschraubbar ist, der in den Fig. 4A und 4B gezeigt ist. Im "Normalfall", wenn also keine Dichtigkeitsprüfung durchgeführt werden soll, ist der Prüfanschluss 2 durch einen Stopfen dicht verschlossen.

Im Gehäuse 10 sind - wie in den Fig. 4A und 4B gezeigt - zwei Ventilklappen 21 und 23 vorgesehen, die jeweils einen Klappenarm 22 aufweisen. Dieser Klappenarm 22 der Ventilklappe 21 wird dann, wenn das Betätigungsende 26 des Bedienungshebels 24 nach oben gehoben wird und Schenkel 25, 25' des Bedienungshebels 24 nach oben schwenken, durch ein Ventilklappenbetätigungsorgan 31 nach unten gedrückt, so dass die Ventilklappe 21 geschlossen ist. Die drehfeste Verbindung zwischen dem Ventilklappenbetätigungsorgan 31 und den Schenkelenden 27, 27' des Bedienungshebels 24 wird über geteilte Betätigungswellen 30, 30' bewirkt, welche Verkantungen 33, 33' aufweisen, die in entsprechende 4-Kantausnehmungen 28, 28' und 35 der Schenkelenden 27, 27' bzw. des Ventilklappenbetätigungsorgans 31 flächenbündig inserieren. Die beiden Teilstücke der Betätigungswelle 30, 30' weisen jeweils Schnapphaken 34 auf, wie dies in Fig. 6 genauer gezeigt ist. Diese Schnapphaken 34 greifen beim Einstecken der Betätigungswelle 30, 30' hinter den Schenkelenden 27, 27' ein, so dass die Betätigungswelle bzw. die Wellenstummel 30, 30' in der eingesteckten Position gesichert sind.

Der Prüfanschluss 2 mündet - wie in den Fig. 4A und 4B gezeigt - in den Raum zwischen den beiden Ventilklappen 21 und 23. Zur Dichtigkeitsprüfung wird - wie in Fig. 4B gezeigt - der Notverschlusshebel 20 nach oben geklappt bzw. das Betätigungsende 26 nach oben gezogen, so dass die Ventilklappe 21 fest geschlossen wird. Wie dies aus Fig. 4B insbesondere hervorgeht, wird dabei durch die Abrundung des Betätigungsendes 26 ein größerer Betätigungswinkel ermöglicht, als dieses bei einem eckig geformten Betätigungsende der Fall wäre. Darüber hinaus ergibt sich eine ergonomische Eingriffsfläche bei gleichzeitig hoher Stabilität des gesamten Bedienungshebels 25, der auch an seinen seitlichen Schenkeln abgerundet ausgebildet ist, wodurch wiederum eine verbesserte Zugänglichkeit des Prüfanschlusses 2 des Gehäuses 10 erzielt wird.

### Bezugszeichenliste

- 1: Trichter
- 2: Prüfanschluss
- 10: Gehäuse
- 11: Gehäusedeckel
- 12: Verschlusshebel
- 13: Einlaufstutzen
- 14: Auslaufstutzen
- 20: Notverschlusshebel
- 21: Ventilklappe
- 22: Klappenarm
- 23: Ventilklappe
- 24: Bedienungshebel
- 25, 25': Schenkel
- 26: Betätigungsende
- 27, 27': Schenkelende
- 28, 28': 4-Kantausnehmung des Bedienungshebels
- 30, 30': Betätigungswelle (Wellenstummel)
- 31: Ventilklappenbetätigungsorgan
- 33, 33': Verkantung
- 34: Schnapphaken
- 35: 4-Kantausnehmung des Ventilklappenbetätigungsorgans

## Patentansprüche

1. Rückstauverschluss, umfassend
- einen Notverschlusshebel (20);
- eine Ventilklappe (21), die mittels des Notverschlusshebels (20) in geschlossenem Zustand arretierbar ist, und
- einen Prüfanschluss (2), an welchem eine Druck-Prüfvorrichtung (1), z.B. ein Prüftrichter anschließbar ist,
**dadurch gekennzeichnet, dass**
der Notverschlusshebel (20) einen U-förmigen Bedienungshebel (24) mit Schenkeln (25, 25') umfasst, dessen Schenkelenden (27, 27') mit einer Betätigungswelle (30, 30') eines Ventilklappenbetätigungsorgans (31) verbunden sind,
wobei der Prüfanschluss (2) zwischen den Schenkeln (25, 25') angeordnet ist.

2. Rückstauverschluss nach Anspruch 1,
**dadurch gekennzeichnet, dass**
ein, die Schenkel (25, 25') verbindendes Betätigungsende (26) des Notverschlusshebels (20) auf seiner Oberseite, an der dem Prüfanschluss (2) zugewandten Kante abgeschrägt oder abgerundet ist.

3. Rückstauverschluss nach einem der vorherigen Ansprüche,
**dadurch gekennzeichnet, dass**
die Schenkel (25, 25') des Notverschlusshebels (20) im Schnitt im Wesentlichen ¼-kreisförmig ausgebildet sind.

4. Rückstauverschluss nach einem der vorhergehenden Ansprüche,
**dadurch gekennzeichnet, dass**
die Betätigungswelle zwei Achsstummel (30, 30') umfasst, welche von außen durch die Schenkelenden (27, 27') in Ausnehmungen (35) des Ventilklappenbetätigungsorgans (31) einsteckbar sind.

5. Rückstauverschluss nach Anspruch 4,
**dadurch gekennzeichnet, dass**
die Achsstummel (30, 30') an Verbindungsstellen mit dem Ventilklappenbetätigungsorgan (31) und den Schenkelenden (27, 27') eine Verzahnung oder Verkantung (33, 33'), z.B. ein 4-Kantprofil zur drehfesten Verbindung aufweisen.

6. Rückstauverschluss nach einem der Ansprüche 4 oder 5,
**dadurch gekennzeichnet, dass**
die Achsstummel (30, 30') über Schnapphaken (34) oder dergleichen lösbare Verbindungen mit den Schenkelenden verbindbar sind.

## Claims

1. Antiflooding valve, comprising
- an emergency locking lever (20);
- a valve flap (21) which can be arrested in the closed state by means of the emergency locking lever (20),
- a test connection (2) to which a pressure testing device, e.g. a test funnel, can be connected,
**characterized in that**
the emergency locking lever (20) comprises a U-shaped operating lever (24) with legs (25, 25'), the leg ends (27, 27') of which are coupled to an actuating shaft (30, 30') of a valve flap actuating member (31),
wherein the test connection (2) is arranged between the legs (25, 25').

2. Antiflooding valve according to claim 1,
**characterized in that**
an operating end (26) of the emergency locking lever (20), which end connects the legs (25, 25'), is beveled or rounded at its upper side at the edge facing the test connection (2).

3. Antiflooding valve according to anyone of the preceding claims,
**characterized in that**
the legs (25, 25') of the emergency locking lever (20), in a sectional view, are formed to be substantially of a quarter circle shape.

4. Antiflooding valve according to anyone of the preceding claims,
**characterized in that**
the actuating shaft comprises two axle stubs (30, 30') which can be inserted from outside through the leg ends (27, 27') in recesses (35) of the valve flap actuating member (31).

5. Antiflooding valve according to claim 4,
**characterized in that**,
at connecting points to the valve flap actuating member (31) and the leg ends (27, 27'), the axle stubs (30, 30') have a toothing or polygonal section (33, 33'), e.g. a square profile for torque-proof connection.

6. Antiflooding valve according to anyone of claims 4 or 5,
**characterized in that**
the axle stubs (30, 30') can be coupled to the leg ends via snap-in hooks or similar detachable connections.

## Revendications

1. Obturateur anti-refoulement, comportant
- un levier d'obturation de secours (20) ;
- un clapet de valve (21) qui est susceptible d'être arrêté dans l'état fermé au moyen du levier d'obturation de secours (20), et
- un raccord de contrôle (2) auquel peut être raccordé un dispositif de contrôle de pression (1), par exemple un entonnoir de contrôle,
**caractérisé en ce que**
le levier d'obturation de secours (20) comprend un levier de manoeuvre (24) en forme de U pourvu de branches (25, 25') dont les extrémités de branche (27, 27') sont reliées à un arbre d'actionnement (30, 30') d'un organe d'actionnement de clapet de valve (31),
le raccord de contrôle (2) étant agencé entre les branches (25, 25').

2. Obturateur anti-refoulement selon la revendication 1,
**caractérisé en ce que**
une extrémité d'actionnement (26) du levier d'obturation de secours (20), laquelle relie les branches (25, 25'), est chanfreinée ou arrondie sur son côté supérieur au niveau de l'arête tournée vers le raccord de contrôle (2).

3. Obturateur anti-refoulement selon l'une des revendications précédentes,
**caractérisé en ce que**
les branches (25, 25') du levier d'obturation de secours (20) sont réalisées en coupe sensiblement en forme de quart de cercle.

4. Obturateur anti-refoulement selon l'une des revendications précédentes,
**caractérisé en ce que**
l'arbre d'actionnement comprend deux moignons d'axe (30, 30') enfichables depuis l'extérieur dans des évidements (35) de l'organe d'actionnement de clapet de valve (31) à travers les extrémités de branche (27, 27').

5. Obturateur anti-refoulement selon la revendication 4,
**caractérisé en ce que**
les moignons d'axe (30, 30') présentent une denture ou une imbrication (33, 33'), par exemple un profil carré, pour la liaison solidaire en rotation, aux emplacements de liaison avec l'organe d'actionnement de clapet de valve (31) et avec les extrémités de branche (27, 27').

6. Obturateur anti-refoulement selon l'une des revendications 4 ou 5,
**caractérisé en ce que**
les moignons d'axe (30, 30') sont susceptibles d'être reliés aux extrémités de branche par des crochets enclenchement (34) ou par des liaisons détachables similaires.
